Europäisches Patentamt

European Patent Office

Office européen des brevets

(19)

(11) Publication number: **0 018 826**
**B1**

(12) **EUROPEAN PATENT SPECIFICATION**

(45) Date of publication of patent specification: 02.03.83

(51) Int. Cl.³: **G 01 N 19/08, G 01 B 5/12**

(21) Application number: 80301423.2

(22) Date of filing: 30.04.80

(54) Apparatus for inspecting a heat exchanger tube.

(30) Priority: 02.05.79 US 35190

(43) Date of publication of application:
12.11.80 Bulletin 80/23

(45) Publication of the grant of the patent:
02.03.83 Bulletin 83/9

(84) Designated Contracting States:
CH DE FR GB IT LI

(56) References cited:
DE - A - 2 554 388
DE - A - 2 747 167
GB - A - 1 347 736
US - A - 3 302 105
US - A - 4 105 972
US - A - 4 172 492
US - A - 4 194 149

(73) Proprietor: THE BABCOCK & WILCOX COMPANY
1010 Common Street P.O. Box 60035
New Orleans Louisiana 70160 (US)

(72) Inventor: Davis, Clarence E
2115 South Arch
Alliance Ohio 44601 (US)
Inventor: Hoyniak, Daniel
307 Graduate House, East
West Lafayette, Indiana 47907 (US)

(74) Representative: Cotter, Ivan John et al,
D. YOUNG & CO. 10 Staple Inn
London WC1V 7RD (GB)

Apparatus for inspecting a heat exchanger tube

This invention relates to apparatus for inspecting a heat exchanger tube. An embodiment of the invention described hereinbelow can be used for determining, in-situ, the integrity of heat exchanger tubes. More particularly, the apparatus embodying the invention can be used for determining, in-situ, in heat exchanger tubes, the location, physical dimensions and character of abnormalities such as, but not limited to, dents, out-of-roundness, inside diameter variations and the like.

The identification and measurement of such abnormalities in steam generators used in nuclear power producing units is of critical importance. Such generators may include upwards of sixteen thousand thin walled small bore tubes. As an order of magnitude, such tubes may have an outside diameter of 15.875 mm (0.625 in), a wall thickness of 0.864 mm (0.034 in) and a length of 20 m (60 ft) or more. The tubes are held in a desired configuration within the generator by a plurality of support plates, distributed along their lengths, and by relatively thick tube sheets at their ends, which also seal the interior from the exterior of the tubes.

Before being placed in service, and during operation, it is essential that the tubes in such generators be free of significant abnormalities. It is therefore an established requirement that the tubes be inspected prior to being placed in service and periodically thereafter so that the location and physical dimensions of such abnormalities, if any, can be determined and a decision made as to the seriousness thereof and the corrective action to be taken.

The generation of eddy current signatures to locate and identify certain types of tube abnormalities is well established in the art. Reference may be made, for example, to United States Patent 3 302 105 which illustrates and describes the eddy current signatures of various types of tube abnormalities which may be detected by this method. This method is not capable, however, of accurately measuring, as contrasted to detecting, the physical dimensions of tube abnormalities such as dents and inside diameter variations.

German Published Patent Application DE—A—2 747 167 discloses apparatus for inspecting a tube, the apparatus including a scanner which is capable of being moved through the tube, a flexure spring which is anchored to the scanner and so arranged as to flex in response to changes in the contour of the tube as the scanner is drawn through the tube, and a strain gauge connected to the flexure spring for generating an output signal corresponding to the flexing of the flexure spring.

The present invention provides apparatus generally of the same type, characterised in that the strain gauge comprises a bi-axial strain gauge bonded to the flexure spring, the strain gauge has one winding predominantly responsive to the flexing of the flexure spring and another winding predominantly responsive to the temperature of the strain gauge, the flexure spring is anchored adjacent one end thereof to a cylindrical body portion of the scanner adjacent the outer circumference of such portion, and the flexure spring is so mounted as to contact the interior wall of the tube, at a position remote from where it is anchored, as the scanner is moved through the tube.

Such an apparatus has the advantage of being relatively insensitive to temperature variations.

Apparatus embodying this invention and described hereinbelow will, in-situ, accurately locate and measure the size of tube abnormalities, and will determine the inside diameter and the out-of-roundness of a heat exchanger tube throughout its entire length. The apparatus embodying the invention is simple to operate, requires a minimum of down time of the heat exchanger, and enables the inspection of heat exchanger tubes located in a hostile environment to be remotely controlled by an operator located in a benign environment.

The invention will now be further described, by way of illustrative and non-limiting example, with reference to the accompanying drawings, in which:

Figure 1 is a schematic illustration of a composite scanner as applied to the in-situ inspection of a typical nuclear steam generator tube;

Figure 2 is a longitudinal cross-sectional view of the composite scanner shown in Figure 1;

Figure 3 is an end view of the composite scanner taken along the line 3—3 of Figure 2 in the direction of the arrows;

Figure 4 is a fragmentary view of a spring finger of the scanner;

Figure 5 is an elementary wiring diagram of measuring circuits incorporated in an inspection system or apparatus embodying the invention and incorporating the composite scanner;

Figure 6 is a block diagram of read-out equipment incorporated in the inspection system; and

Figure 7 is a fragmentary view of part of a typical recording of the read-out equipment illustrated in Figure 6.

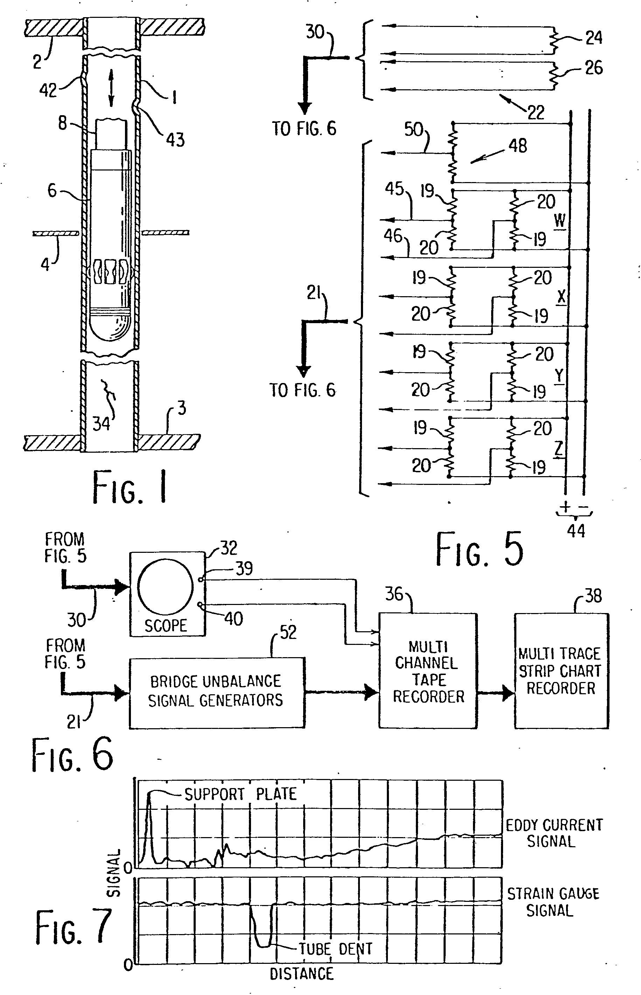

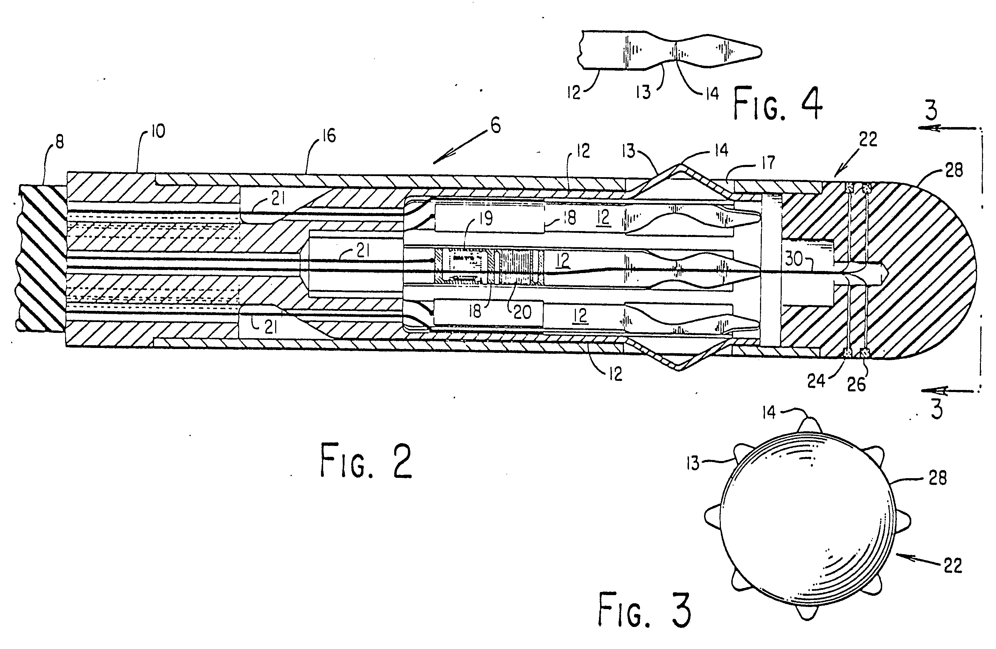

Referring to the drawings, wherein like reference characters designate like or corresponding parts throughout the several views, there is shown in Figure 1 a cross section of a fragment of a tube 1, as incorporated in a nuclear steam generator, supported at its upper end by a tube sheet 2 and at its lower end by a tube sheet 3. The tube sheets 2 and 3 are welded to the tube 1 so that a fluid circulated through the tube, which may be the primary coolant, is isolated from water and steam surrounding the exterior of the tube.

Distributed along the length of the tube are a plurality of support plates 4 which hold the tube 1 in a desired position. The tube 1 is not secured to the support plates 4 by welding or the like, but passes through, with close tolerance, holes drilled or otherwise formed in the support plates, which are also provided with passageways for the flow of water and/or steam along the exterior of the tube. As a tube sheet may, for present purposes, be considered a special type of support plate, the generic term 'support plate' will hereinafter be used.

Shown within the tube 1 is a composite scanner 6 attached to a cable 8 for drawing the scanner through the tube at a selected speed, usually in the order of 30 cm (one foot) per second. Various arrangements are known for drawing a scanner through a tube. One such arrangement, particularly suited to the scanning of tubes in a nuclear steam generator, is illustrated and described in United Kingdom Patent Application Publication No. GB 2 005 840 A. In making a scan, the scanner 6 is ordinarily positioned at one end of the tube 1, or at a predetermined bench mark, as, for example, a selected support plate, and then drawn through the tube by a remotely located drive mechanism (not shown) at the selected speed.

Figures 2 and 3 show the scanner 6, respectively, in longitudinal cross-section and as viewed along the line 3—3 of Figure 2 in the direction of the arrows. A cylindrical body 10 of the scanner 6 is provided with a plurality of cantilever, spring fingers 12, equally spaced about the circumference of the body. In the illustrated embodiment there are eight of the spring fingers 12. The spring fingers 12 may be formed integrally with the body or securely anchored thereto by any suitable means. Near its free end a section of each finger 12 is bent to form an outwardly extending crook 13, necked down to form a cusp 14, as shown in Figure 4. In making a tube scan, the cusps 14 bear against the tube wall and follow changes in contour as may be caused by dents, diameter variations and the like. Preferably, but not essentially, the fingers 12 are enclosed in a protective shroud or sheath 16, secured to the body 10, and provided with openings or apertures 17 through which the crooks 13 project.

To each finger 12 there is secured, preferably at or near the point of maximum strain adjacent the body 10, a bi-axial strain gauge 18 provided with a winding 19 running parallel with the longitudinal centre-line of the finger and a winding 20 running at right-angles to the centre-line. The resistance of the winding 19 changes in proportion to changes in ambient temperature and the deflection of the spring finger 12 from a null or neutral position. The resistance of the winding 20 is substantially unaffected by deflection of the spring finger 12, but changes resistance in proportion to changes in ambient temperature. Each strain gauge winding 19, 20 is provided with leads, such as shown at 21, running through passageways formed in the body 10 and through the cable 8 to signal receiving instrumentation, to be described later.

Incorporated in the composite scanner 6 is an eddy current sensor, generally indicated at 22, comprising differential windings 24, 26 housed in a body 28 of insulating material, such as nylon, carried by and secured in the sheath 16. Leads 30 running through the body 10 and cable 8 transmit signals generated by the eddy current sensor 22 to the signal receiving instrumentation. In transversing a tube, the cusps 14, as shown in Figure 1, bear against the interior wall of the tube causing each spring finger 12 to bend from the predetermined null or normal position in accordance with variations in the tube profile.

In Figure 5, a circuit configuration is shown whereby, in traversing a tube, the deflection of each spring finger 12 from a null or normal position may be determined, or the algebraic sum of the deflections of any two spring fingers from a null or normal position may be determined. As it is ordinarily the algebraic sum of the deflection of diametrically opposite spring fingers 12 which is of interest, Figure 5 shows the eight spring fingers incorporated in four bridge circuits W, X, Y, Z, and energised from a suitable source of potential 44, wherein the diametrically opposite strain gauges 19 are arranged in push-pull relationship. The potential difference, or bridge unbalance as it may be termed, appearing across leads 45, 46 of any one of the bridge circuits W, X, Y, Z is therefore a measure of the algebraic sum of the deflections of the diametrically opposite spring fingers 12. It is apparent that the algebraic sum of the deflections of any two spring fingers, as for example, adjacent spring fingers, can be determined by the potential difference between any two leads 45, two leads 46, or any combination of leads 45, 46.

Also incorporated in the circuit configuration is a voltage divider 48, comprising two series-connected windings, generating a predetermined potential appearing on a lead 50. Accordingly, changes in the difference in potentials between the lead 50 and any one of the leads 45 or 46 of the bridge circuits W, X, Y, Z will be a measure of the displacement of the spring finger 12 from a null or normal position in traversing a tube. From the displacements of all of the spring fingers 12 the shape of the tube at any one or all points in a traverse can be determined, as can also whether any abnormalities so found are such as to jeopardize the integrity of the tube.

The potential of the lead 50 and the potentials of the leads 45, 46 for each of the bridge circuits W, X, Y, Z, collectively identified as leads 21 in Figure 5, are transmitted to suitable read-out devices such as those shown in Figure 6. Signals corresponding to bridge unbalances are generated in a device 52 comprising a number of bridge unbalance signal generators, the number of such signal generators depending upon the particular type of tube scan. Thus, four such signal generators would be required to simultaneously read out the algebraic sum of the deflections of diametrically opposite spring fingers, whereas eight such generators would be required to simultaneously read out the deflection of each spring finger from a null or normal position. The signals generated in the device 52 can be transmitted to a variety of read-out devices as dictated by the exigencies of a particular application. As examples of such read-out devices, Figure 6 shows a tape recorder 36 and a strip chart recorder 38 responsive to the signals generated in the device 52. From the read-out devices such significant data as the inside tube radial dimensions at eight points at any one or all points in the tube traverse can be plotted or digitised.

The electrical connections from the eddy current sensor 22 are carried through the lead 30 to an eddy current tester 32, such as a Zetec/Automation EM 3300 Eddy Current Tester, which incorporates a scope. The signature appearing on the scope of the tester 32, as the scanner 6 traverse a tube, will vary depending upon the character of the tube. Thus, following the usual circuit adjustments, as the eddy current sensor 22 scans a sound portion of the tube, a minor horizontal deflection is obtained representative of sensor wobble, whereas tube abnormalities, such as a crack shown at 34 in Figure 1, will generate on the scope of figure eight pattern from which the location and type of flaw can be determined. In traversing the tube adjacent a support plate, a fat two lobed signature of the support plate is generated as discussed in United Kingdom Patent Application Publication No. GB 2 010 492 A. The abrupt change in either the horizontal or vertical component of the eddy current signal available at terminals 39, 40 at the nearest support plate can therefore be taken as a bench mark, from which, knowing the speed of the scanner in traversing a tube, the exact location of a tube defect can be determined. To provide proper correlation, the signals available at the terminals 39, 40 are transmitted, as shown, to the tape recorder 36 and strip chart recorder 38 simultaneously with the readings from the strain gauges.

In Figure 7 there is shown a fragment of typical chart traces of one component, either horizontal or vertical, of an eddy current sensor and the signal output of one strain gauge bridge or a single spring finger generated by the composite scanner 6 in traversing a tube. As shown, the eddy current signal abruptly changes at a support plate and provides a bench mark by which, knowing the ratio between scanner and chart speeds, the location of a dent, such as shown at 42 and 43 in Figure 1, relative to the support plate 4 can be accurately determined. Other tube abnormalities such as variations in diameter, out-of-roundness and the like encountered during a traverse can be accurately located. The physical dimensions and contour of the abnormality can be determined by an analysis of the signal outputs as recorded on the tape recorder 36 or the chart recorder 38.

## Claims

1. Apparatus for inspecting a heat exchanger tube (1), the apparatus comprising a scanner (6) which is capable of being moved through the tube (1), a flexure spring (12) which is anchored to the scanner (6) and so arranged as to flex in response to changes in the contour of the tube (1) as the scanner (6) is drawn through the tube, and a strain gauge (18) connected to the flexure spring (12) for generating an output signal corresponding to the flexing of the flexure spring (12), characterised in that the strain gauge (18) comprises a bi-axial strain gauge bonded to the flexure spring (12), the strain gauge (18) has one winding (19) predominantly responsive to the flexing of the flexure spring (12) and another winding (20) predominantly responsive to the temperature of the strain gauge (18), the flexure spring (12) is anchored adjacent one end thereof to a cylindrical body portion of the scanner (6) adjacent the outer circumference of such portion, and the flexure spring (12) is so mounted as to contact the interior wall of the tube (1), at a position remote from where it is anchored, as the scanner (6) is moved through the tube.

2. Apparatus according to claim 1, including a cylindrical shroud (16) secured to the cylindrical body portion around its outer circumference, the shroud (16) surrounding the flexure spring (12) and having an aperture (17) through which the other end of the flexure spring (12) extends.

3. Apparatus according to claim 2, wherein the flexure spring (12) is crooked (13) adjacent its other end to form a cusp (14) for contacting the wall of the tube (1).

4. Apparatus according to any one of claims 1 to 3, wherein the strain gauge windings (19, 20) are connected in series across a source (44) of potential, the apparatus comprising a voltage divider (48) having two windings connected in series across the source (44) of potential and means (52) for generating a signal corresponding to the difference in the potentials of the connection between the strain gauge windings (19, 20) and the connection between the voltage divider (48) windings.

5. Apparatus according to any one of claims 1 to 3, including a plurality of the flexure springs (12) anchored to the scanner (6) and each having bonded thereto a said bi-axial strain gauge (18), the springs (12) being so positioned that in use they are spaced about the centre of a tube (1) in which the scanner is disposed.

6. Apparatus according to claim 5, wherein the two strain gauge windings (19, 20) bonded to each of the flexure springs (12) are connected in series across a common source (44) of potential in parallel, and means (52) is provided for generating a signal corresponding to the difference in potentials of the connections between the two strain gauge windings (19, 20) of any selected pair of flexure springs (12).

7. Apparatus according to claim 6, wherein the strain gauge windings (19, 20) of the selected pair of flexure springs (12) are connected in parallel and in push-pull relationship across the common source (44) of potential.

8. Apparatus according to any one of the preceding claims, for inspecting a tube (1) which is provided with a contiguous support plate (4) maintaining the tube in a predetermined position, the apparatus including an eddy current sensor (22) incorporated in the scanner (6) for generating a unique output signal when the scanner (6) traverses the tube (1) adjacent to the support plate (4) to thereby establish a bench mark identifying a point in the travel of the scanner through the tube.

**Patentansprüche**

1. Vorrichtung zum genauen Untersuchen eines Wärmetauscherrohres (1) mit einem Meßstellenabtaster (6), welcher durch das Rohr (1) bewegt werden kann, einer Biegungsfeder (12), die an dem Meßstellenabtaster (6) verankert und so angeordnet ist, daß sie sich in Abhängigkeit von Kontuänderungen des Rohres (1) biegen kann, sobald der Meßstellenabtaster (6) durch das Rohr gezogen wird, und einem Dehnungsmesser (18), der mit der Biegungsfeder (12) zur Erzeugung eines Ausgangssignals verbunden ist, welches dem Durchbiegen der Biegungsfeder (12) entspricht, dadurch gekennzeichnet, daß der Dehnungsmesser (18) einen zweiachsigen Dehnungsmesser aufweist, der mit der Biegungsfeder (12) verbunden ist und eine Wicklung (19) hat, die vorwiegend auf das Durchbiegen der Biegungsfeder (12) anspricht, und eine andere Wicklung (20) hat, die vorwiegend auf die Temperatur des Dehnungsmessers (18) anspricht, daß die Biegungsfeder (12) neben ihrem einen Ende an einem zylindrischen Körperteil des Meßstellenabtasters (6) neben dem Außenumfang dieses Teiles verankert ist und daß die Biegungsfeder (12) so befestigt ist, daß sie die Innenwand des Rohres (1) an einer Stelle entfernt von der Stelle berührt, wo sie verankert ist, sobald der Meßstellenabtaster (6) durch das Rohr bewegt wird.

2. Vorrichtung nach Anspruch 1, dadurch gekennzeichnet, daß eine zylindrische Abschirmung (16) an dem zylindrischen Körperteil rund um seinen Außenumfang angebracht ist; die Biegungsfeder (12) umgreift und eine Öffnung (17) aufweist, durch welche sich das andere Ende der Biegungsfeder (12) erstreckt.

3. Vorrichtung nach Anspruch 2, dadurch gekennzeichnet, daß die Biegungsfeder neben ihrem anderen Ende gekrümmt ist (13), um für die Berührung mit der Wand des Rohres (1) eine Spitze (14) zu bilden.

4. Vorrichtung nach einem der Ansprüche 1 bis 3, dadurch gekennzeichnet, daß die Dehnungsmesserwicklungen (19, 20) in Reihe über eine Spannungsquelle (44) verbunden sind und daß die Vorrichtung einen Spannungsteiler (48) aufweist, wobei zwei Wicklungen in Reihe über die Spannungsquelle verbunden und Einrichtungen (52) vorgesehen sind für die Erzeugung eines Signals entsprechend der Potentialdifferenz der Verbindung zwischen den Dehnungsmesserwicklungen (19, 20) und der Verbindung zwischen den Spannungsteilerwicklungen (48).

5. Vorrichtung nach einem der Ansprüche 1 bis 3, dadurch gekennzeichnet, daß eine Vielzahl von Biegungsfedern (12) am Meßstellenabtaster (6) verankert ist, mit jeder Feder ein zweiachsiger Dehnungsmesser (18) verbunden ist und die Federn (12) so angeordnet sind, daß sie bei der Benutzung um das Zentrum eines Rohres (1), in welchem der Meßstellenabtaster angeordnet ist, im Abstand angeordnet sind.

6. Vorrichtung nach Anspruch 5, dadurch gekennzeichnet, daß zwei Dehnungsmesserwindungen (19, 20), die mit jeder der Biegungsfedern (12) verbunden sind, in Reihe über einer gemeinsamen Spannungsquelle (44) parallel angeschlossen sind, und daß Einrichtungen (52) vorgesehen sind für die Erzeugung eines Signals, welches der Potentialdifferenz der Verbindungen zwischen den zwei Dehnungsmesserwicklungen (19, 20) eines beliebigen ausgesuchten Paares von Biegungsfedern (12) entspricht.

7. Vorrichtung nach Anspruch 6, dadurch gekennzeichnet, daß die Dehnungsmesserwicklungen (19, 20) des ausgesuchten Paares von Biegungsfedern (19) parallel und im Gegentakt über der gemeinsamen Spannungsquelle (44) angeschlossen sind.

8. Vorrichtung nach einem der vorhergehenden Ansprüche für das genaue Untersuchen eines Rohres (1), welches mit einer angrenzenden Stützplatte (4) versehen ist, welche das Rohr in einer vorbestimmten Position hält, dadurch gekennzeichnet, daß die Vorrichtung einen in dem Meßstellenabtaster (6) eingearbeiteten Wirbelstromsensor (22) aufweist zur Erzeugung eines einmaligen Ausgangssignales, wenn der Meßstellenabtaster (6) über das Rohr (1) neben der Stützplatte (4) hinwegfährt, um dadurch eine Bewertungsmarke zu bilden, welche eine Stelle beim Durchlauf des Meßstellenabtasters durch das Rohr identifiziert.

**Revendications**

1. Appareil d'inspection pour un tube (1) d'échangeur de chaleur, cet appareil comportant un dispositif d'exploration (6) apte à être déplacé à travers le tube (1), un ressort de flexion (12) qui est accroché au dispositif d'exploration (6) et est agencé de manière à fléchir en réponse à des variations du contour du tube (1) lorsque le dispositif d'exploration (6) est tiré à l'intérieur du tube, et une jauge de contrainte (18) raccordée au ressort de flexion (12) pour produire un signal de sortie correspondant au fléchissement du ressort de flexion (12), caractérisé en ce que la jauge de contrainte (18) est une jauge de contrainte biaxiale liée au ressort de flexion (12), la jauge de contrainte (18) comporte un enroulement (19) sensible de façon prédominante à la flexion du ressort de flexion (12) et un autre enroulement (20) sensible de façon prédominante à la température de la jauge de contrainte (18), le ressort de flexion (12) est accroché, au voisinage d'une de ses extrémités, sur une partie de corps cylindrique du dispositif d'exploration (6) au voisinage du pourtour extérieur d'une telle partie, et le ressort de flexion (12) est monté de manière à contacter la paroi intérieure du tube (1), dans une position distante de l'endroit où il est accroché, lorsque le dispositif d'exploration (6) est déplacé à travers le tube.

2. Appareil selon la revendication 1, incluant une enceinte cylindrique (16) fixée à la partie de corps cylindrique autour de sa circonférence extérieure, l'enceinte (16) entourant le ressort de flexion (12) et comportant une ouverture (17) à travers laquelle s'étend l'autre extrémité du ressort de flexion (12).

3. Appareil selon la revendication 2, dans lequel le ressort de flexion (12) est coudé (13) au voisinage de son autre extrémité de manière à former un sommet (14) pour contacter la paroi du tube (1).

4. Appareil selon l'une quelconque des revendications 1 à 3, dans lequel les enroulements (19, 20) de la jauge de contrainte sont branchés en série aux bornes d'une source de potentiel (44), l'appareil comportant un diviseur de tension (48) possédant deux enroulements branchés en série aux bornes de la source de potentiel (44) et des moyens (52) pour produire un signal correspondant à la différence entre les potentiels de la jonction entre les enroulements (19, 20) et de la jonction entre les enroulements du diviseur de tension (48).

5. Appareil selon l'une quelconque des revendications 1 à 3 comportant plusieurs ressorts de flexion (12) accrochés au dispositif d'exploration (6) et à chacun desquels est fixée une jauge de contrainte biaxiale (18), les ressorts (12) étant disposés de telle manière que lors de leur utilisation, ils sont espacés autour du centre d'un tube (1) dans lequel le dispositif d'exploration est disposé.

6. Appareil selon la revendication 5, dans lequel les deux enroulements (19, 20) de la jauge de contrainte, fixés à chacun des ressorts de flexion (12), sont branchés en série aux bornes d'une source commune de potentiel (44) en parallèle, et des moyens (52) sont prévus pour produire un signal correspondant à la différence des potentiels des jonctions entre les deux enroulements (19, 20) des jauges de contrainte et une quelconque paire sélectionnée de ressorts de flexion (12).

7. Appareil selon la revendication 6, dans lequel les enroulements (19, 20) des jauges de contrainte de la paire sélectionnée de ressorts de flexion (12) sont branchés en parallèle et en push-pull aux bornes de la source commune de potentiel (44).

8. Appareil selon l'une quelconque des revendications précédentes, pour le contrôle d'un tube (1) qui est équipé d'une plaque de support (4) contiguë maintenant le tube dans une position prédéterminée, l'appareil comportant un capteur à courants de Foucault (22) incorporé dans le dispositif d'exploration (6) pour la production d'un signal de sortie unique lorsque le dispositif d'exploration (6) traverse le tube (1) au voisinage de la plaque de support (4) de manière à établir de ce fait une marque de repère identifiant un point sur le parcours du dispositif d'exploration à travers le tube.

**0018826**

FIG. 1

FIG. 5

TO FIG. 6

TO FIG. 6

FIG. 6

FROM FIG. 5

FROM FIG. 5

SCOPE

BRIDGE UNBALANCE SIGNAL GENERATORS

MULTI CHANNEL TAPE RECORDER

MULTI TRACE STRIP CHART RECORDER

FIG. 7

SUPPORT PLATE

EDDY CURRENT SIGNAL

STRAIN GAUGE SIGNAL

SIGNAL

TUBE DENT

DISTANCE

FIG. 4

FIG. 2

FIG. 3

0018826